# EUROPÄISCHE PATENTANMELDUNG

(11) **EP 0 811 855 A2**
(43) Veröffentlichungstag der Anmeldung: **10.12.1997**
(21) Anmeldenummer: 97104826.9
(22) Anmeldetag: 21.03.1997
(51) Int. Cl.: G01S 13/93, G01S 13/86, G01S 17/93

(54) **Sensorsystem zur automatischen relativen Positionskontrolle**

(30) Priorität: 07.06.1996 DE 19622777
(71) Anmelder: ROBERT BOSCH GMBH, 70442 Stuttgart (DE)
(72) Erfinder: Gaillard, Alain, 76133 Karlsruhe (DE); Uhler, Werner, Dr., 76646 Bruchsal (DE)

(57) **Zusammenfassung**

Es wird ein Sensorsystem vorgeschlagen, daß zur automatischen relativen Positionsbestimmung zwischen zwei Objekten dient, und aus einer Kombination eines winkelunabhängigen Sensors und eines winkelabhängigen Sensors besteht. Die Messung des Abstandes r sowie den relativen Winkels θ zwischen den Objekten bestimmt die Position der beiden Objekte zueinander in ausreichender Weise.

## Beschreibung

### Stand der Technik

Die Erfindung geht aus von einem Sensorsystem für die automatische relative Positionsbestimmung zwischen zwei Objekten, wobei zum einen der Abstand, zum andern der relative Winkel zwischen den beiden Objekten bestimmt werden muß.
Es sind bereits Verfahren zur Bestimmung des Abstands sowie des Winkels zwischen zwei Objekten bekannt. Dabei werden mehrstrahlige Lidars oder Ultraschallsensoren, sowie winkelaufgelöstes Radar eingesetzt. Diese Sensoren haben allerdings den Nachteil daß sie für bestimmte Anwendungen, z. B. für die Nahfeldsensorik am Auto, entweder viel zu teuer oder für kleine Reichweiten, nämlich dem Bereich von einigen Zentimetern bis zu etwa 10 Metern nicht realisierbar sind. Weiterhin sind Triangulationssensoren bekannt, die allerdings nur eine grobe Abstandsauflösung haben. Für den Einsatz der Sensorsysteme ist allerdings wünschenswert, kostengünstige und einfach zu installierende, eventuell nachrüstbare Sensorsysteme zu haben.

### Vorteile der Erfindung

Das erfindungsgemäße Sensorsystem mit den kennzeichnenden Merkmalen des Hauptanspruchs hat demgegenüber den Vorteil daß ein einfacher Abstandssensor mit einem optischen, winkelauflösenden Sensor verbunden wird und so eine vorteilhafte, kostengünstige Anordnung für die Erfassung der relativen Position zweier Objekte zu realisieren ist.

Durch die in den Unteransprüchen aufgeführten Maßnahmen sind besonders vorteilhafte Weiterbildungen und Verbesserungen des im Hauptanspruch angegebenen Sensorsystems möglich. Besonders vorteilhaft ist es, daß der winkelauflösende Sensor durch einen einfachen Ersatz durch einen Sensor mit höherer Auflösung an die gewünschten Meßziele angepaßt werden kann. Weiterhin ist es von Vorteil, daß auch eine räumliche Erfassung des zu bestimmenden Objektes möglich ist, da ein winkelauflösender Sensor auch eine zweidimensionale Messung ermöglicht. Der Abstandssensor besteht vorteilhafterweise aus einem einfachen Ultraschallsensor oder einem kleinen günstigen Radar- oder Lidarsystem.

Von Vorteil ist weiterhin, daß der Abstandssensor nur einen Meßkanal der Meßwerterfassung mit der relativ aufwendigen Laufzeitmessung blockiert. Die anderen Kanäle des winkelabhängigen Sensors dienen als binäre Meßgeber. Damit ist eine schnelle Auswertung der Meßdaten gegeben.
Es ist weiterhin sehr einfach, die Auflösung des Azimuts auf der Basis des winkelauflösenden optischen Sensors zu erhöhen, da eine Lichtbündelung wesentlich einfacher ist als z. B. die Bündelung von Mikrowellen.

Ein weiterer Vorteil ist es, daß der erfindungsgemäße Sensor sehr kompakt eingebaut werden kann.

### Zeichnung

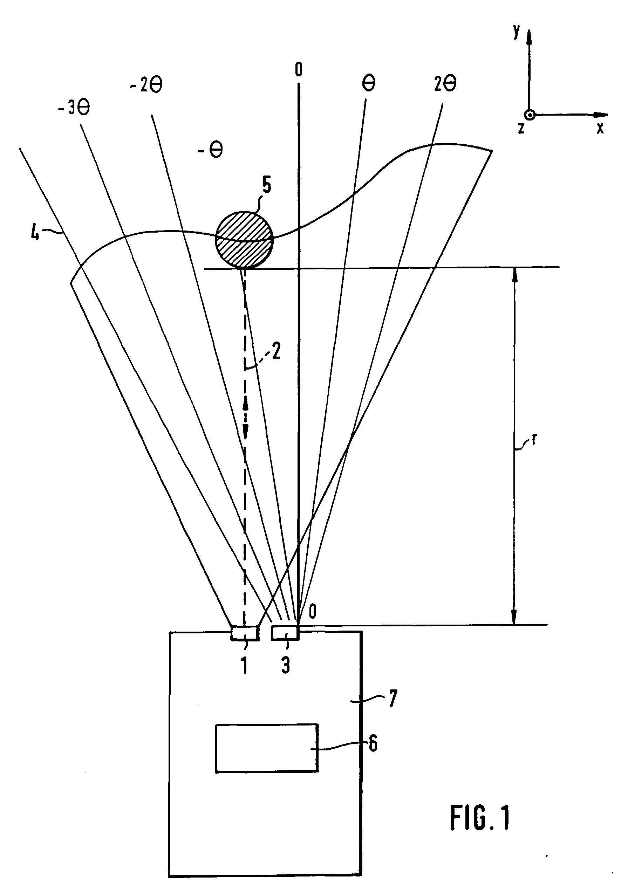

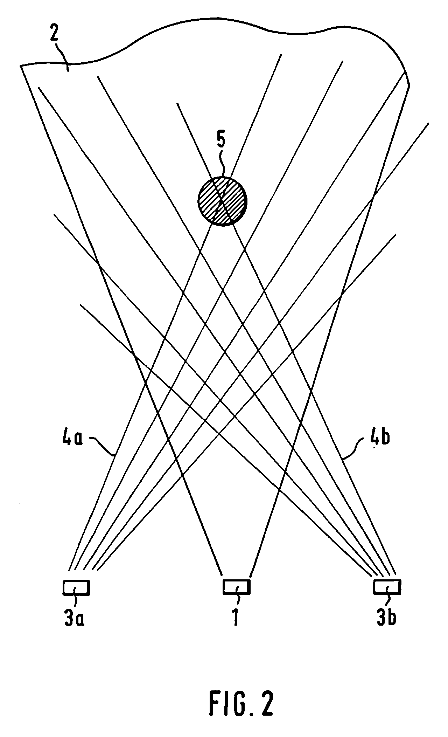

Zwei Ausführungsbeispiele der Erfindung sind in den Zeichnungen dargestellt und in der nachfolgenden Beschreibung näher erläutert. Es zeigen Figur 1 die Abstands- und Winkelmessung zwischen zwei Objekten mit einem winkelauflösenden und einem nicht winkelauflösenden Sensor. Figur 2 zeigt ein Ausführungsbeispiel mit Triangulationsverfahren.

### Beschreibung der Ausführungsbeispiele

Das Sensorsystem besteht aus einer Kombination eines nicht winkelauflösenden Abstandssensors 1, der z.B. über eine Laufzeitmessung des ausgestrahlten Signals 2 den Abstand zu dem Objekt 5 auswertet. Es kommen dabei Radar-, Lidar- oder Ultraschallsensoren zum Einsatz. Das zweite Bauelement des Sensors besteht aus einer geometrischen Anordnung von optoelektronischen Sendern und Empfängern 3, die in Form von Lichtschranken 4 angeordnet sind. Als Voraussetzung für eine erfolgreiche Messung müssen die beiden Sensoren 1 und 3 einen gemeinsamen Detektionsbereich abdecken. Die Sensoren 1 und 3 sollten räumlich eng benachbart sein (Einbau in die Frontpartie eines Fahrzeugs 7) und in eine gemeinsame Richtung strahlen, siehe Figur 1. Der nicht winkelauflösende Sensor 1 detektiert das Objekt 5. Er errechnet den Abstand r, d. h. die longitudinale Position zu diesem Objekt über Laufzeitmessung, z. B. durch Phasenverschiebung, Pulse, FMCW des Signals 2. Das Meßsignal wird vom Sensor 1 erfaßt und in der Meßwerterfassung 7 ausgewertet und so der Abstand bestimmt. Das Objekt 5 wird auch vom Sensor 3 erfaßt. Wenn der Strahl eines der optischen Sender das Objekt 5 trifft, entsteht eine Reflexion auf der Oberfläche. Das Rückstreusignal von dieser Reflexion wird an einem Empfänger der Empfängerleiste empfangen. Eine Auswertung der Laufzeit zwischen Sender und Empfangssignal wird nicht durchgeführt. Die Position des Empfänger in der Empfangerleiste 4 gibt ein Maß für die azimutale Position θ. Das Signal des Empfängers wird als binäre Zahl an die Meßwerterfassung ausgegeben. Auf Basis von r und θ ist eine zweidimensionale Positionsbestimmung des Objekts 5 eindeutig möglich.

In einer weiteren Ausführungsform wird mittels einer Array-Anordnung von optoelektronischen Sendern und Empfängern das Objekt 5 dreidimensional mit r, θ, φ erfaßt. θ ist dabei der Winkel der Abweichung des gemessenen Objekts in der x-y-Ebene und φ der Winkel in der x-z-Ebene.

Figur 2 zeigt eine weitere Ausführungsform, bei der als Alternative zu den Lichtschranken 4 eine Kombination von Triangulationssensoren 3a und 3b mit einem reinen Abstandssensor des Typs 1 denkbar ist. Die Abstandsauflösung dieser Kombination ist gegenüber den reinen Triangulationssensoren 3a mit den Sendestrahlen 4a und mit den Empfangsstrahlen 4b deutlich erhöht.

## Patentansprüche

1. Sensorsystem für die automatische relative Positionsbestimmung zwischen zwei Fahrzeugen, dadurch gekennzeichnet, daß ein Abstandssensor mit einem optischen, winkelauflösenden Sensor kombiniert ist.

2. Sensorsystem nach Anspruch 1, dadurch gekennzeichnet, daß der Abstandssensor ein Radar-, Lidar- oder Ultraschallsensor sein kann.

3. Sensorsystem nach Anspruch 1 und 2, dadurch gekennzeichnet, daß der optisch winkelauflösende Sensor Sender und Empfänger in einer Anordnung als Lichtschranken aufweist.

4. Sensorsystem nach den Ansprüchen 1 bis 3, dadurch gekennzeichnet, daß die Meßdatenerfassung den Abstandsmeßkanal entsprechend der angewandten Meßmethode auswertet und von den Positionsempfängern ein binäres Signal erhält.

5. Sensorsystem nach den Ansprüchen 1 bis 4, dadurch gekennzeichnet, daß optische Sender und Empfänger in einer Fläche angeordnet sind.

6. Sensorsystem nach den Ansprüchen 1 bis 5, dadurch gekennzeichnet, daß die Sensoren in unmittelbare Nähe voneinander installiert sind.

7. Sensorsystem nach den Ansprüchen 1 bis 5, dadurch gekennzeichnet, daß die Sensoren räumlich getrennt voneinander angeordnet sind.
